# EUROPEAN PATENT APPLICATION

(11) **EP 4 661 254 A1**
(43) Date of publication of application: **10.12.2025**
(21) Application number: 25180130.4
(22) Date of filing: 02.06.2025
(51) Int. Cl.: H02K 1/278, H02K 15/035, H02K 29/03

(54) **ELEVATOR SYSTEM, PERMANENT MAGNET MOTOR THEREFOR, AND MANUFACTURING METHOD FOR PERMANENT MAGNET MOTOR**

(30) Priority: 07.06.2024 CN 202410740811
(71) Applicant: Otis Elevator Company, Farmington, Connecticut 06032 (US)
(72) Inventor: Gao, Guochen, Tianjin, 300457 (CN); Zhu, Fengkun, Tianjin, 300457 (CN); Liu, Ruguang, Tianjin, 300457 (CN)
(74) Representative: Schmitt-Nilson Schraud Waibel Wohlfrom Patentanwälte Partnerschaft mbB

(57) **Abstract**

The present invention provides an elevator system, a permanent magnet motor therefor, and a manufacturing method for a permanent magnet motor. The permanent magnet motor comprises: a stator; and a rotor coupled to the stator, wherein the rotor comprises a rotor shaft and a permanent magnet assembly mounted to the rotor shaft, the permanent magnet assembly comprising: a support member; and a plurality of magnet units attached to the support member along a circumference of the support member, each magnet unit comprising: a first portion made of a first material and second portions made of a second material located on both sides of the first portion in a circumferential direction, where the first portion has a greater remanence than that of the second portion. The device and method according to the embodiments of the present invention can reduce the cost of permanent magnet motors.

## Description

The present invention relates to the technical field of elevators, in particular to an elevator system, a permanent magnet motor therefor, and a manufacturing method for a permanent magnet motor.

For an elevator system, the driving motor therein is usually a permanent magnet motor, where the magnets of the rotor are usually sintered magnets, which are bonded to the inner wall of the rotor through a bonding method. For example, as shown in FIG. 4 of the Chinese invention CN205407491, the sintered magnets are bonded to the inner side of the rotor with predetermined intervals.

Another approach is to insert sintered magnets in the form of magnetic steel into the magnetic steel slots of the rotor. During the operation of the motor, sintered magnets will generate harmonics, which will interfere with the expected sinusoidal fundamental waves and may also cause noise and vibration.

The objective of the present invention is to solve or at least alleviate the problems existing in the prior art.

According to one aspect, a permanent magnet motor for an elevator system is provided, comprising:
a stator; and
a rotor coupled to the stator, wherein the rotor comprises a rotor shaft and a permanent magnet assembly mounted to the rotor shaft, the permanent magnet assembly comprising:
   a support member; and
   a plurality of magnet units attached to the support member along a circumference of the support member, each magnet unit comprising: a first portion made of a first material and second portions made of a second material located on both sides of the first portion in a circumferential direction, where the first portion has a greater remanence than that of the second portion.[0001]

Particular embodiments further may include at least one, or a plurality of, the following optional features, alone or in combination with each other:

Optionally, in an embodiment of the permanent magnet motor, the support member is cylindrical, and the plurality of magnet units are attached to an outer or inner circumferential surface of the support member.

Optionally, in an embodiment of the permanent magnet motor, the support member is formed by curling an elongated support member blank formed by stacking a plurality of layers of metal sheets, wherein the elongated support member blank comprises a first surface and a second surface opposite to each other, and the plurality of magnet units are attached to the first surface of the elongated support member blank, and wherein a single elongated support member blank is curled into a cylindrical support member, or a plurality of elongated support member blanks are curled and combined into a cylindrical support member, such that the first surface becomes an outer circumferential surface of the support member and the second surface becomes an inner circumferential surface of the support member.

Optionally, in an embodiment of the permanent magnet motor, the second surface of the elongated support member blank is provided with a plurality of slots.

Optionally, in an embodiment of the permanent magnet motor, the plurality of slots are aligned with transition portion of adjacent magnet units, and the width of the plurality of slots gradually decreases from the second surface towards the interior of the elongated support member blank.

Optionally, in an embodiment of the permanent magnet motor, the first portion of the magnet unit is an anisotropic sintered magnet, the second portion of the magnet unit is an isotropic bonded magnet, and the second portion of the magnet unit is formed on the first portion of the magnet unit.

Optionally, in an embodiment of the permanent magnet motor, the first material is an RTB based magnetic material, and the second material is a composite of magnetic particles and resin.

Optionally, in an embodiment of the permanent magnet motor, the plurality of magnet units are magnetized on the support member.

Optionally, in an embodiment of the permanent magnet motor, each of the plurality of magnet units has a remanence distribution substantially in a sinusoidal waveform in the circumferential direction after magnetization, and adjacent magnet units in the plurality of magnet units have opposite magnetic polarities.

Optionally, in an embodiment of the permanent magnet motor, the plurality of magnet units further comprise third portions located circumferentially between the first portion and the second portions, and the remanence of the third portion is between that of the first portion and that of the second portion.

Optionally, in an embodiment of the permanent magnet motor, the plurality of magnet units further comprise a plurality of portions located circumferentially between the first portion and the second portions, and the remanence of the plurality of portions is between that of the first portion and that of the second portion, and increases as they approach the first portion.

Optionally, in an embodiment of the permanent magnet motor, the second portions of the plurality of magnet units cover the first portions on an inner side in a radial direction and/or on an outer side in the radial direction.

Optionally, in an embodiment of the permanent magnet motor, the radial inner surface and/or radial outer surfaces of the plurality of magnet units are formed in an arc shape.

Optionally, in an embodiment of the permanent magnet motor, the thickness of the first portions and/or second portions of the plurality of magnet units in the radial direction is configured to gradually decrease from the middle to both sides.

According to another aspect, an elevator system is provided, comprising a permanent magnet motor according to the various embodiments, wherein the permanent magnet motor is used for a traction machine of the elevator system.

Particular embodiments further may include at least one, or a plurality of, the above optional features, alone or in combination with each other:

According to another aspect, a manufacturing method for a permanent magnet motor is provided, comprising:
stacking a plurality of layers of metal sheets to form an elongated support member blank comprising a first surface and a second surface opposite to each other;
attaching a plurality of magnet units on the first surface, each magnet unit comprising: a first portion made of a first material and second portions made of a second material located on both sides of the first portion, where the first portion has a greater remanence than the second portion;
curling a single elongated support member blank into a cylindrical support member or curling and combining a plurality of elongated support member blanks into a cylindrical support member, such that the first surface becomes an outer circumferential surface of the support member and the second surface becomes an inner circumferential surface of the support member;
magnetizing the magnet units on the support member; and
connecting a rotor shaft to the support member.

Particular embodiments further may include at least one, or a plurality of, the following optional features, alone or in combination with each other:

Optionally, the first portion of the magnet unit is an anisotropic sintered magnet, the second portion of the magnet unit is an isotropic bonded magnet, and the second portion of the magnet unit is formed on the first portion of the magnet unit and attached to the first surface of the elongated support member blank.

The device and method according to the embodiments of the present invention can reduce the cost of permanent magnet motors.

With reference to the accompanying drawings, the disclosure of the present invention will become easier to understand. Those skilled in the art would easily understand that these drawings are for the purpose of illustration, and are not intended to limit the protection scope of the present invention. In addition, in the figures, similar numerals are used to denote similar components, where:
FIG. 1 is a schematic diagram of an exemplary elevator system;
FIG. 2 illustrates a schematic diagram of a permanent magnet assembly of a permanent magnet motor according to an embodiment of the present invention;
FIG. 3 illustrates a schematic diagram of an elongated support member blank that constitutes a permanent magnet assembly;
FIG. 4 illustrates the remanence distributions of two adjacent magnet units in FIG. 2; and
FIGS. 5 to 8 illustrate schematic diagrams of magnet units according to a plurality of alternative embodiments.

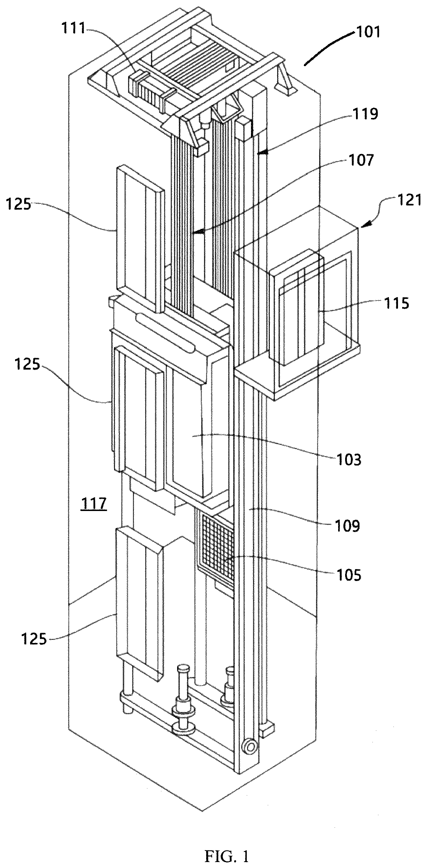

FIG. 1 is a perspective view of an elevator system 101 including an elevator car 103, a counterweight 105, a rope 107, a guide rail 109, a traction machine 111, and an elevator system controller 115. The elevator car 103 and counterweight 105 are connected to each other by the rope 107. The rope 107 may include or be configured as, for example, ropes, steel cables, and/or coated-steel belts. In this embodiment, the rope is configured as a rope strip integrated with a plurality of ropes. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109. The rope 107 engages the traction machine 111, which is part of an overhead structure of the elevator system 101. The traction machine 111 is configured to control movement between the elevator car 103 and the counterweight 105.

The elevator system controller 115 is located, as shown, in an elevator system controller room 121 of the elevator shaft 117 and is configured to control the operation of the elevator system 101, and particularly the elevator car 103. For example, the elevator system controller 115 may provide drive signals to the traction machine 111 to control the acceleration, deceleration, leveling, stopping, etc. of the elevator car 103. When moving up or down within the elevator shaft 117 along guide rail 109, the elevator car 103 may stop at one or more landings 125 as controlled by the elevator system controller 115. Although shown in an elevator system controller room 121, those of skill in the art will appreciate that the elevator system controller 115 can be located and/or configured in other locations or positions within the elevator system 101. The traction machine 111 may include a motor or similar driving mechanism.

Although shown and described with a roping system, elevator systems that employ other methods and mechanisms of moving an elevator car within an elevator shaft may employ embodiments of the present invention. FIG. 1 is merely a non-limiting example presented for illustrative and explanatory purposes.

For the elevator system shown in FIG. 1, the driving device such as traction machine 111 therein generally employs a permanent magnet motor. The permanent magnet motor comprises: a stator; and a rotor coupled with the stator, wherein the stator may comprise coils wound around it to generate a magnetic field based on electric excitation, and the rotor comprises a rotor shaft and a permanent magnet assembly mounted on the shaft of the device. The rotor is coupled with the stator, that is, it rotates when the stator is energized to generate a magnetic field. The permanent magnet assembly according to various embodiments of the present invention will be described below herein, which can be applied to the traction machine 111 in the elevator system described above or other driving devices in the elevator system.

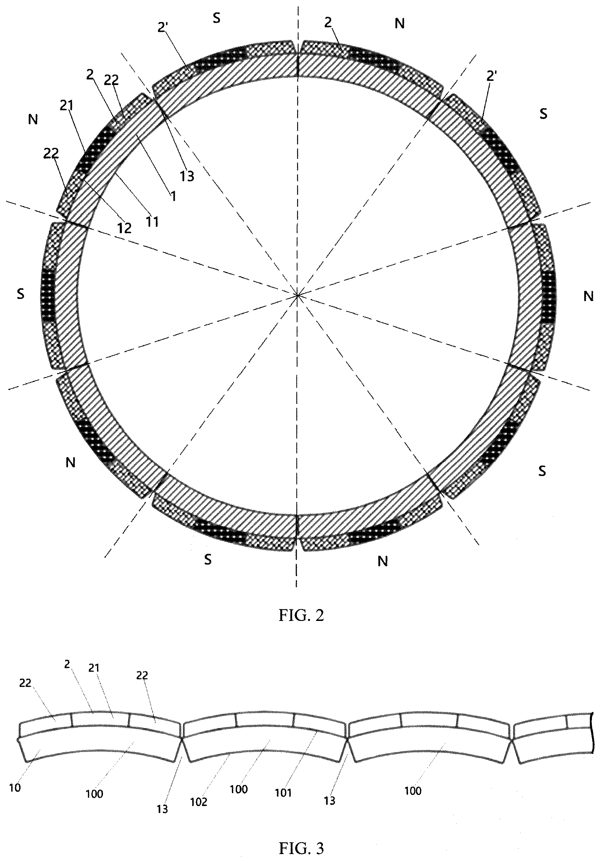

As shown in FIG. 2, the permanent magnet assembly according to an embodiment of the present invention comprises: a support member 1; and a plurality of magnet units 2, 2' attached to the support member 1 along its circumference, each of the magnet units 2, 2' comprising: a first portion 21 made of a first material and second portions 22 made of a second material located on both sides of the first portion 21 in the circumferential direction, where the first portion 21 has a remanence (Br) greater than that of the second portion 22. The use of portions with different remanence in the circumferential direction to form the magnet unit makes the magnetic field distribution after magnetization closer to a sinusoidal distribution, effectively reducing the influence of harmonics.

Although only one end face of the permanent magnet assembly is shown in FIG. 2, it should be appreciated that the permanent magnet assembly extends a certain length along the axial direction. Therefore, the support member 1 can actually be cylindrical, and the plurality of magnet units 2, 2' can be elongated. The plurality of magnet units 2, 2' can be attached to the outer circumferential surface 12 of the support member. At this point, the rotor shaft can be fitted to the inner circumferential surface 11 of the support member 1, through, for example, interference fit or spline fit. In alternative embodiments, the plurality of magnet units 2, 2' can be attached to the inner circumferential surface 11 of the support member.

With continued reference to FIG. 3, an elongated support member blank 10 for the permanent magnet assembly shown in FIG. 2 being manufactured using the method according to an embodiment of the present invention is illustrated. In some embodiments, the support member 1 can be formed by curling an elongated support member blank 10 as shown in FIG. 3. The elongated support member blank 10 is formed by stacking a plurality of layers of metal sheets, where the metal sheets can be formed into a predetermined shape by stamping. A plurality of layers of metal sheets are stacked along the axial direction to form an elongated support member blank 10, which has a first surface 101 and a second surface 102 opposite to each other. A plurality of magnet units 2, 2' are attached to the first surface 101 of the elongated support member blank 10. The elongated support member blank 10 is curled into a cylindrical support member 1, such that the first surface 101 becomes the outer circumferential surface 12 of the support member 1, and the second surface 102 becomes the inner circumferential surface 11 of the support member 1. In some embodiments, the second surface 102 of the elongated support member blank 10 is provided with a plurality of slots 13 between arc-shaped units 100. In some embodiments, the width of the plurality of slots 13 gradually decreases from the second surface 102 to the first surface 101. For example, the slot forms a triangle before the elongated support member blank 10 is curled, and forms a narrow slit after the elongated support member blank 10 is curled into a support member 1. In some embodiments, the plurality of slots 13 are aligned with the transition portions of adjacent magnet units, so that the magnet units 2 will not deform during curling. The configuration of a plurality of slots 13 makes it easy for the elongated support member blank 10 to deform, thereby facilitating the curling of the elongated support member blank 10.

It should be appreciated that although in the illustrated embodiment, a single elongated support member blank 10 is curled into a cylindrical support member 1, where the two ends of the single elongated support member blank 10 are connected. In alternative embodiments, however, a plurality of elongated support member blanks 10 respectively corresponding to the arcs of the cylindrical support member 1 can be selected, such as two, three, or more elongated support member blanks 10, to be curled and combined to form the cylindrical support member 1. In the illustrated embodiment, a plurality of magnet units 2, 2' are attached to the support member before the elongated support member blank 10 is curled. In alternative embodiments, a plurality of magnet units 2, 2' can be directly attached to the support member 1 after the elongated support member blank 10 is curled into the support member 1. Compared to the traditional structure that completely uses sintered magnets attached to the rotor, the integrated permanent magnet assembly according to the embodiment is easier to assemble to the rotor.

In some embodiments, the first portion 21 of each magnet unit is an anisotropic sintered magnet, and the second portion 22 of the magnet unit is an isotropic bonded magnet. In some embodiments, the first material is an RTB based magnetic material, which includes rare metals, such as NdFeB based magnetic materials, while the second material is a composite of magnetic particles and resin, which has good forming properties, such as being able to be formed by molding or other methods. In some embodiments, the second portion 22 of the magnet unit may be formed onto the first portion 21 of the magnet unit, such as through moulding and other forming processes commonly used for plastic materials. In some embodiments, during the forming process of the second portion 22 of the magnet unit, the second portion 22 of the magnet unit along with the first portion 21 of the magnet unit may be attached to the first surface 101 of the elongated support member blank 10. In alternative embodiments, the magnet unit 2, after being formed, can be attached to the elongated support member blank 10 or the cylindrical support member 1 by adhesive or other means.

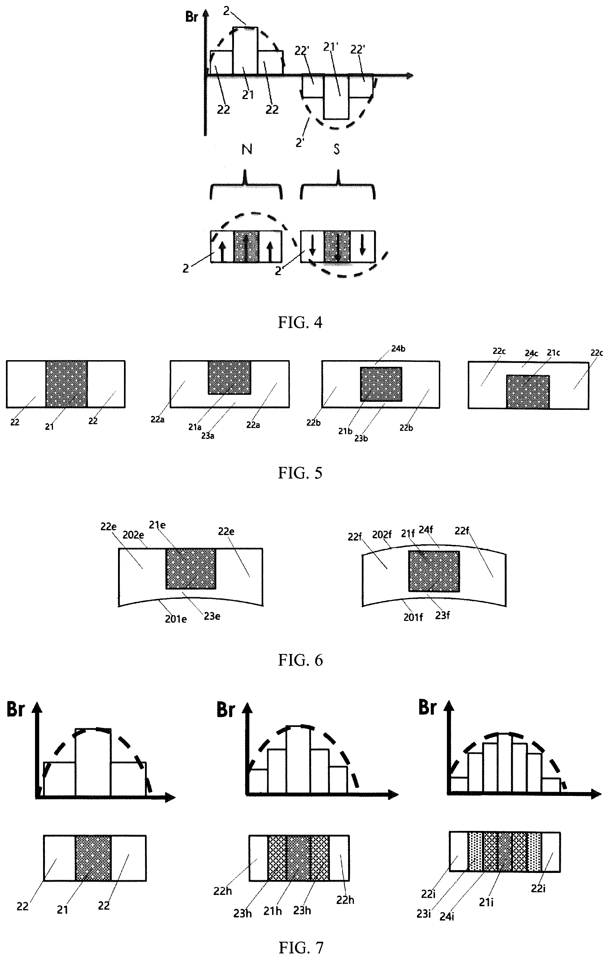

With continued reference to FIG. 4, the magnetic field distribution of adjacent two magnet units 2, 2' of the permanent magnet assembly shown in FIG. 2 after magnetization is shown. It should be appreciated that, in the embodiments of the present invention, each magnet unit 2 can be magnetized after it is placed on the cylindrical support member 1. Each of the plurality of magnet units is composed of portions with different remanence, resulting in a remanence distribution that is similar to a sinusoidal waveform in the circumferential direction after it is magnetized (see FIG. 4). And, adjacent magnet units 2 and 2' in the plurality of magnet units 2 have opposite magnetic polarities. The use of magnet units with different portions makes the magnetic field distribution closer to a sinusoidal waveform. In addition, partially using non-sintered magnets can also reduce the material cost of the motor.

With continued reference to FIGS. 5 to 8, various magnet units according to various embodiments will be described. The first magnet unit in FIG. 5 is a conventional magnet unit, which comprises a first portion 21 and second portions 22 located on both sides of the first portion 21 in the circumferential direction.

The second magnet unit in FIG. 5 is a variation of the aforementioned magnet unit, which comprises a first portion 21a and second portions 22a located on both sides of the first portion 21a in the circumferential direction, wherein the second portions 22a also include a first additional portion 23a covering the first portion 21a on the radial inner side.

The third magnet unit in FIG. 5 is a variation of the aforementioned magnet unit, which comprises a first portion 21b and second portions 22b located on both sides of the first portion 21b in the circumferential direction, wherein the second portions 22b also include a first additional portion 23b covering the first portion 21b on the radial inner side and a second additional portion 24b covering the first portion 21b on the radial outer side.

The fourth magnet unit in FIG. 5 is a variation of the aforementioned magnet unit, which comprises a first portion 21c and second portions 22c located on both sides of the first portion 21c in the circumferential direction, wherein the second portions 22c also include a second additional portion 24c covering the first portion 21c on the radial outer side.

Although the cross-sections of the respective magnet units in FIG. 5 are shown as rectangles, it should be appreciated that for ease of attachment to the cylindrical support member, the radial inner surfaces and/or radial outer surfaces of the respective magnet units may be formed as curveture. The first magnet unit in FIG. 6 comprises a first portion 21e and second portions 22e located on both sides of the first portion 21e in the circumferential direction, wherein the second portions 22e also include a first additional portion 23e covering the first portion 21e on the radial inner side. Wherein, the radial inner surface 201e of the magnet unit composed of the first additional portion 23e is arc-shaped, where the magnet unit can be attached to the outer circumferential surface of the support member through the radial inner surface 201e.

The second magnet unit in FIG. 6 is a variation of the magnet unit, which comprises a first portion 21f and second portions 22f located on both sides of the first portion 21f in the circumferential direction, wherein the second portions 22f also include a first additional portion 23f covering the first portion 21f on the radial inner side and a second additional portion 24f covering the first portion 21f on the radial outer side. Wherein, the radial inner surface 201f and the radial outer surface 202f of the magnetic unit respectively composed of the first additional portion 23f and the second additional portion 24f are arc-shaped, where the magnet unit can be attached to the inner or outer circumferential surface of a cylindrical support member by means of the radial inner surface 201f or the radial outer surface 202f.

It should be appreciated that, by providing formable second portions 22, the design ability of the structure and shape of the magnet unit is enhanced. For example, by covering the radial inner side and/or radial outer side of the first portion 21 with the second portions 22, the formed magnet unit can have better bonding strength and magnetic field distribution. Forming the radial inner surface and/or radial outer surface of the magnet unit into an arc shape can makes it easier to attach the magnet unit to the cylindrical support member 1, while still allowing for the use of sintered magnets with rectangular cross-sections, thus making it easier to manufacture sintered magnets. In addition, the magnetic field distribution can be adjusted by adjusting the thickness of the magnet unit at different positions, so that its magnetic field has fewer harmonics and is closer to a sinusoidal distribution

The first magnet unit in FIG. 7 is a conventional magnet unit, which comprises a first portion 21 and second portions 22 located on both sides of the first portion 21 in the circumferential direction. The similarity between the remanence distribution and the sinusoidal distribution is shown in the figure.

In order to further increase the similarity between remanence and sinusoidal distribution, the second magnet unit in FIG. 7 is referred to as a five-piece magnet unit. The magnet unit also comprises third portions 23h located circumferentially between the first portion 21h and the second portions 22h. The third portions 23h are also composed of anisotropic sintered magnets, and the remanence of the third portion 23h is between that of the first portion 21h and that of the second portion 22h.

In order to further increase the similarity between remanence and sinusoidal distribution, the third magnet unit in FIG. 7 is referred to as a seven-piece magnet unit. The magnet unit also comprises third portions 23i and fourth portions 24i located circumferentially between the first portion 21i and the second portions 22i. The third portions 23i and the fourth portions 24i can also be composed of anisotropic sintered magnets, and the remanence of the third portion 23i and that of the fourth portion 24i are between that of the first portion 21i and that of the second portion 22i, and increases as they approach the first portion 21i. It is possible to conceive the application of a similar nine-piece magnet unit or a magnet unit consisting of more pieces to further increase the similarity between remanence and sinusoidal distribution.

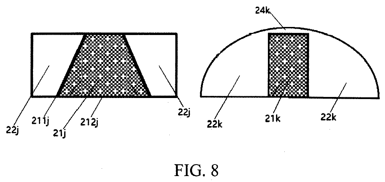

Further, in the variation of the first magnet unit in FIG. 8, the thickness of the first portion 21j of the magnet unit in the radial direction gradually decreases from the middle 212j to the two sides 211j. For example, in the illustrated embodiment, the first portion 21j of the magnet unit is trapezoidal, but it is conceivable that the first portion 21j of the magnet unit may be semi-circular, semi-elliptical, inverted-trapezoidal, diamond-shaped, and the like. Through such structures, it is also possible to approximately simulate a sinusoidal distribution without the need to add more magnetic portions.

In the variation of the second magnet unit in FIG. 8, the first portion 21k of the magnet unit made of sintered magnet still maintains a rectangular cross-section for ease of manufacturing, but the second portions 22k of the magnet unit formed on it can be configured to have a radial thickness gradually decreasing from the middle to both sides (except for the second additional portion 24k that overlaps with the first portion 21k). In addition, in this embodiment, the second portion 22k of the magnet unit is configured to be substantially semi-circular. By constructing the thickness of the first portion and/or second portion of the magnet unit in the radial direction to gradually decrease from the middle to both sides, it is possible to better simulate the sinusoidal magnetic field distribution without adding additional portions.

It should be appreciated that the various features described above for the magnet unit can be combined with each other without mutual exclusion to achieve one or more desired characteristics of the magnet unit.

According to another aspect of the embodiments of the present invention, a manufacturing method for a permanent magnet motor is provided, comprising: stacking a plurality of layers of metal sheets to form an elongated support member blank 10 comprising a first surface 101 and a second surface 102 opposite to each other; attaching a plurality of magnet units 2, 2' on the first surface 101, each magnet unit comprising: a first portion 21 made of a first material and second portions 22 made of a second material located on both sides of the first portion 21, where the first portion 21 has a greater remanence than that of the second portion 22; curling a single elongated support member blank 10 into a cylindrical support member 1 or curling and combining elongated support member blanks 10 to form a cylindrical support member 1, such that the first surface 101 becomes an outer circumferential surface 12 and the second surface 102 becomes an inner circumferential surface 11; magnetizing the plurality of magnet units 2, 2' on the support member 1 and connecting the rotor shaft to the permanent magnet assembly. In some embodiments, the first portion 21 of the magnet unit may be an anisotropic sintered magnet, the second portion 22 of the magnet unit may be an isotropic bonded magnet, and the second portion 22 of the magnet unit is formed on the first portion 21 of the magnet unit and attached to the first surface 101 of the elongated support member blank 10.

According to yet another aspect of the embodiments of the present invention, a manufacturing method for a permanent magnet motor is provided, comprising: stacking a plurality of layers of metal sheets to form an elongated support member blank 10 comprising a first surface 101 and a second surface 102 opposite to each other; curling a single elongated support member blank 10 into a cylindrical support member 1 or curling and combining a plurality of elongated support member blanks 10 to form a cylindrical support member 1; attaching a plurality of magnet units 2, 2' to the inner or outer circumferential surface of the cylindrical support member 1, each magnet unit comprising: a first portion 21 made of a first material and second portions 22 made of a second material located on both side of the first portion 21, where the first portion 21 has a greater remanence than that of the second portion 22; magnetizing the plurality of magnet units 2, 2' on the support member 1 and connecting the rotor shaft to the permanent magnet assembly. In some embodiments, the first portion 21 of the magnet unit may be an anisotropic sintered magnet, and the second portion 22 of the magnet unit may be an isotropic bonded magnet. The second portions 22 of the magnet unit are formed on the first portion 21 of the magnet unit and attached to the inner or outer circumferential surface of the cylindrical support member 1. The method described in the above embodiments simplifies the manufacturing and assembly process of the permanent magnet assembly.

The specific embodiments described above in the present invention are merely intended to describe the principles of the present invention more clearly, wherein various components are clearly shown or described to facilitate the understanding of the principles of the present invention. Those skilled in the art may, without departing from the scope of the present invention, make various modifications or changes to the present invention. Therefore, it should be understood that these modifications or changes should be included within the scope of patent protection of the present invention.

## Claims

1. A permanent magnet motor for an elevator system, comprising:
a stator; and
a rotor coupled to the stator, wherein the rotor comprises a rotor shaft and a permanent magnet assembly mounted to the rotor shaft, the permanent magnet assembly comprising:
a support member; and
a plurality of magnet units attached to the support member along a circumference of the support member, each magnet unit comprising: a first portion made of a first material and second portions made of a second material located on both sides of the first portion in a circumferential direction, where the first portion has a greater remanence than that of the second portion.

2. The permanent magnet motor according to claim 1, wherein the support member is cylindrical, and the plurality of magnet units are attached to an outer or inner circumferential surface of the support member.

3. The permanent magnet motor according to claim 2, wherein the support member is formed by curling an elongated support member blank formed by stacking a plurality of layers of metal sheets, where the elongated support member blank comprises a first surface and a second surface opposite to each other, and the plurality of magnet units are attached to the first surface of the elongated support member blank, and where a single elongated support member blank is curled into a cylindrical support member, or a plurality of elongated support member blanks are curled and combined into a cylindrical support member, such that the first surface becomes an outer circumferential surface of the support member and the second surface becomes an inner circumferential surface of the support member.

4. The permanent magnet motor according to claim 3, wherein the second surface of the elongated support member blank is provided with a plurality of slots.

5. The permanent magnet motor according to claim 4, wherein the plurality of slots are aligned with transition portion of adjacent magnet units, and width of the plurality of slots gradually decreases from the second surface to the first surface.

6. The permanent magnet motor according to any of claims 1 to 5, wherein the first portion of the magnet unit is an anisotropic sintered magnet, the second portion of the magnet unit is an isotropic bonded magnet, and the second portion of the magnet unit is formed on the first portion of the magnet unit.

7. The permanent magnet motor according to claim 6, wherein the first material is an RTB based magnetic material, and the second material is a composite of magnetic particles and resin.

8. The permanent magnet motor according to claim 6 or 7, wherein the plurality of magnet units are magnetized on the support member.

9. The permanent magnet motor according to claim 8, wherein each of the plurality of magnet units has a remanence distribution substantially in a sinusoidal waveform in the circumferential direction after magnetization, and adjacent magnet units in the plurality of magnet units have opposite magnetic polarities.

10. The permanent magnet motor according to any of claims 1 to 9, wherein the plurality of magnet units further comprise a third portion located circumferentially between the first portion and the second portions, and a remanence of the third portion is between that of the first portion and that of the second portion.

11. The permanent magnet motor according to any of claims 1 to 10, wherein the plurality of magnet units further comprise a plurality of portions located circumferentially between the first portion and the second portions, and a remanence of the plurality of portions is between that of the first portion and that of the second portion, and increases as they approach the first portion; and/or wherein the second portions of the plurality of magnet units cover the first portion on an inner side in the radial direction and/or on an outer side in the radial direction.

12. The permanent magnet motor according to any of claims 1 to 11, wherein radial inner surfaces and/or radial outer surfaces of the plurality of magnet units are formed in an arc shape; and/or wherein thickness of the first portions and/or second portions of the plurality of magnet units in the radial direction is configured to gradually decrease from the middle to both sides.

13. An elevator system, wherein the elevator system comprises a permanent magnet motor according to any of claims 1 to 12, where the permanent magnet motor is used for a traction machine of the elevator system.

14. A manufacturing method for a permanent magnet motor, comprising:
stacking a plurality of layers of metal sheets to form an elongated support member blank comprising a first surface and a second surface opposite to each other;
attaching a plurality of magnet units on the first surface, each magnet unit comprising: a first portion made of a first material and second portions made of a second material located on both sides of the first portion, where the first portion has a greater remanence than that of the second portion;
curling a single elongated support member blank into a cylindrical support member or curling and combining a plurality of elongated support member blanks into a cylindrical support member, such that the first surface becomes an outer circumferential surface of the support member and the second surface becomes an inner circumferential surface of the support member;
magnetizing the magnet units on the support member; and
connecting a rotor shaft to the support member.

15. The method according to claim 14, wherein the first portion of the magnet unit is an anisotropic sintered magnet, the second portion of the magnet unit is an isotropic bonded magnet, and the second portion of the magnet unit is formed on the first portion of the magnet unit and attached to the first surface of the elongated support member blank.
